# EUROPÄISCHE PATENTSCHRIFT

(11) **EP 1 679 108 B1**
(45) Veröffentlichungstag und Bekanntmachung des Hinweises auf die Patenterteilung: **25.04.2007**
(21) Anmeldenummer: 05021945.0
(22) Anmeldetag: 07.10.2005
(51) Int. Cl.: B01D 25/12, B01D 35/30

(54) **Filtervorrichtung und Filterzelle**
Filter device and filter cell
Dispositif filtrant et cellule filtrante

(30) Priorität: 23.12.2004 DE 102004062041
(43) Veröffentlichungstag der Anmeldung: 12.07.2006
(73) Patentinhaber: Siteco Gmbh & Co. Kg, 55450 Langenlonsheim (DE)
(72) Erfinder: Amtmann, Till, 55559 Bretzenheim (DE); Tesch, Ralf, 55131 Mainz (DE)
(74) Vertreter: Bartels & Partner

(56) Entgegenhaltungen:
- DE-A1- 10 003 678
- DE-A1- 10 216 305
- DE-U1- 8 809 132

## Beschreibung

Die Erfindung betrifft eine Filtervorrichtung, insbesondere Filterpresse, mit mindestens einem Unfiltrat- und einem Filtratanschluß und einer in Längsrichtung sich erstreckenden Halteeinrichtung zur Halterung mindestens einer Filterzelle, die mittels einer Presseinrichtung an der Halteeinrichtung festlegbar und mittels einer Dichteinrichtung über Kanäle fluidführend mit dem Unfiltrat- und dem Filtratanschluß verbindbar ist. Die Erfindung betrifft des weiteren eine Filterzelle für den Einsatz bei dahingehenden Filtervorrichtungen.

Durch die DE 198 52 084 A1 ist eine Filtervorrichtung mit einer Mehrzahl von parallel zueinander angeordneten Filterplatten bekannt, zwischen denen sowohl Filtermedien als auch mit Druckluft beaufschlagbare Membranplatten angeordnet sind, wobei zwischen Filtermedium und Membranplatte jeweils ein Unfiltratraum vorgesehen ist, der mit einem gemeinsamen Unfiltratzulauf verbunden ist. Bei der bekannten Lösung ist das Filtermedium eine Filterschicht und die Membranplatten sind jeweils beidseitig ausschließlich mit einer Membran bespannt, die eine glatte Außenoberfläche aufweist und derart aus einem flexiblen Material besteht, dass sie bei Druckbeaufschlagung den benachbarten Unfiltratraum vollständig auskleiden kann.

Da bei der bekannten Lösung die Membran sich ohne Behinderung durch das Filtertuch in die Filterkammer bzw. Urifiltratkammer ausdehnen kann, kann ein flexibles Material für die Membran verwendet werden, das es erlaubt, bei Druckbeaufschlagung die Filterkammer vollständig auszukleiden, so dass die Membran unmittelbar auf den sich auf der Filterschicht gebildeten Filterkuchen drückt. Zwar wird durch die dahingehende Anordnung die jeweilige Filtermembran beansprucht; dennoch bietet diese Anordnung von Membranplatten und Filterschichten Vorteile bei der Reinigung. Die jeweiligen Membranen können insoweit aufgeblasen werden, dass sich zwischen der Membran und der Filterschicht nur ein geringer Zwischenraum mit entsprechend kleinem Querschnitt einstellt, so dass hohe Strömungsgeschwindigkeiten für die Reinigungsflüssigkeit erzielbar sind. So lassen sich die für eine optimale Reinigung erforderlichen Strömungsgeschwindigkeiten von 2m/sec problemlos erreichen; allein eine Abreinigung von Verunreinigungen im Bereich der Einspannstellen von Membranplatten und Filterschichten ist nur möglich, wenn man die dahingehenden Einzelrahmen nach Verlegen der Vorrichtung und Entfernen der Filterschichten und Membranen einzeln abreinigt, wobei es beim anschließenden Zusammenbau für einen erneuten Filtrierbetrieb zu einem ungewollten Schmutzeintrag kommen kann. Insbesondere bei Anwendungsfällen im pharmazeutischen und biotechnologischen Bereich, wo es auf höchste Reinheitsgrade und Prozess-Sicherheit ankommt, insbesondere bei der Blutplasmafraktionierung, findet die bekannte Lösung dann insoweit ihre Anwendungsgrenzen.

Durch die DE 39 06 816 A1 ist eine weitere Filtervorrichtung als Schichtenfilter bekannt. Dieser bekannte Schichtenfilter weist eine Mehrzahl von parallel zueinander angeordneten und mit innenliegenden, der Bildung von Zu- und Ablaufkanälen dienenden Augen versehenen Filterplatten auf, die mit dazwischen eingesetzten, entsprechende Augenaussparungen aufweisenden Filterschichten zu einem Filterpaket zusammengefaßt sind, wobei die Filterschichten bei der Pressung des Filterpaketes zwischen äußeren, auch die Augen umgebenden und über den Umfang der Filterplatten unterbrechungslos durchgehenden Rahmenprofilen der Filterplatten zur Abdichtung des Filterpaketes zusammengepreßt sind und wobei das Rahmenprofil jeder Filterplatte an der einen, einer Filterschicht zugekehrten Fläche mindestens eine umfängliche durchgehende, nach außen vorspringende Preßkante aufweist. Mit dem bekannten Schichtenfilter ist gleichfalls eine sichere Festlegemöglichkeit für die jeweilige Filterschicht als Filtermedium erreicht; dennoch ergibt sich auch, wie bei dem eingangs erwähnten Stand der Technik, keine Abreinigungsmöglichkeit für die genannten Klemm- oder Preßspalte, an denen die Filterschichten zwischen den Rahmen festlegbar sind, es sei denn, man nimmt wiederum eine Einzel-Abreinigung der voneinander separierbaren Rahmen vor. Insoweit bestehen also vergleichbare Nachteile wie eingangs beschrieben.

Ausgehend von diesem Stand der Technik stellt sich daher die Erfindung die Aufgabe, eine Vorrichtung sowie eine Filterzelle zu schaffen, die die Vorteile der bekannten Lösungen mit der Möglichkeit kombiniert, diese für den Einsatz bei speziellen Anwendungen der pharmazeutischen sowie der chemischen und biotechnologischen Industrie zu erschließen. Eine dahingehende Aufgabe löst eine Filtervorrichtung mit den Merkmalen des Patentanspruches 1 in seiner Gesamtheit sowie eine Filterzelle gemäß den Merkmalen des Patentanspruches 10.

Dadurch, dass gemäß dem kennzeichnenden Teil des Patentanspruches 1 die jeweilige Filterzelle im wesentlichen gekapselt und insoweit mit einer geschlossenen Hülle versehen ist, die von der Dichteinrichtung abgedichtet ausschließlich von den Kanälen durchbrochen ist, ist die Filterzelle als sog. Einwegprodukt ausgebildet, d.h. nach einer Filtration mit der Filtervorrichtung können die verblockten oder verschmutzten Filterzellen der Filtervorrichtung entnommen und entsorgt werden, wobei in Abhängigkeit des einzusetzenden Kunststoffmaterials für die jeweilige Filterzelle diese recycelbar oder thermisch veraschbar ist. Durch die fluiddichte Kapselung der Filterzelle verläuft deren Ausbau sauber und hygienisch, ohne dass Teile des abfiltrierten Filterkuchens oder das Fluid selbst die Filterzelle ungewollt verlassen können. Somit entfällt die sonst übliche und aufwändige Reinigung von Mehrwegfilterplatten, wie im Stand der Technik aufgezeigt. Mithin eignet sich die erfindungsgemäße Filtervorrichtung aufgrund des hygienischen Handlings seiner Filterzellen besonders zur Filtration bei kritischen Prozess-Schritten innerhalb der Pharmazie, der Biotechnologie und der Chemie.

Zwar erscheint es zunächst unwirtschaftlich, die erfindungsgemäße Filtervorrichtung mit Filterzellen als Einwegprodukt auszustatten; da die aber kostengünstig in der Herstellung ausgestalteten Filterzellen rasch gegen neue austauschbar sind, sind die Kosten als gering anzusehen gegenüber den Kosten, die ansonsten entstehen, wenn der Filtrationsprozeß mit der Vorrichtung anzuhalten ist, um einzelne Mehrweg-Filterplatten, wie im Stand der Technik aufgezeigt, abzureinigen und wieder in Betrieb zu nehmen. Unabhängig hiervon bleibt das Risiko der systemimanenten Restverschmutzung bei den bekannten Lösungen, die derart nicht beherrschbar sind und zu kostenintensiven Prozeßausfällen im Filtrationsbetrieb führen können. Mit der erfindungsgemäßen Einweglösung an Filterzellen wird grundsätzlich die Filtervorrichtung wie neu in Betrieb genommen, sofern neue Filterzellen eingesetzt sind, so dass das Problem der Restverschmutzung nicht auftritt. Die erfindungsgemäße Filtervorrichtung arbeitet demgemäß ausgesprochen prozeßsicher und störungsfrei. Eine Filterzelle mit den Merkmalen des Anspruches 10 ist für den Einsatz bei dahingehenden Filtervorrichtungen geeignet und läßt sich entsprechend kostengünstig herstellen und bevorraten.

Bei einer bevorzugten Ausführungsform der erfindungsgemäßen Filtervorrichtung ist vorgesehen, dass die Presseinrichtung zwei Endplatten aufweist, von denen eine den jeweiligen Unfiltrat- und Filtratanschluß aufweist und von denen mindestens eine mittels eines Aktuators auf die jeweils andere Endplatte relativ zu und von dieser wieder weg bewegbar ist, wobei zwischen den beiden Endplatten die jeweilige Filterzelle - auch gruppenweise zusammengefaßt - von der Halteeinrichtung aufgenommen ist. Vorzugsweise sind dabei für jede Filterzelle weitere Dichtmittel vorgesehen, die zumindest teilweise aus Randbereichen des jeweiligen Filtermediums gebildet sind, die zwischen Rahmenteilen der Filterzelle eingespannt sind. Unter der Einwirkung der Presseinrichtung können dann die Rahmenteile einer Filterzelle das eingespannte Filtermedium stärker verpressen, so dass im Betriebszustand, also beim Filtrieren mit der Filtervorrichtung, über die Dichtmittel Leckagen mit Sicherheit vermieden sind, so dass nicht ungewollt gegebenenfalls kontaminierte Prozessflüssigkeit aus der Vorrichtung mit ihren Filterzellen austreten kann.

Die jeweils zum Einsatz kommende Filterzelle ist modular aufgebaut, wobei mehrere Filterzellen zusammengefaßt auch eine Filterzellengruppe ergeben können und bei entsprechend unterteilter Filtervorrichtung können gegebenenfalls verschiedene Gruppen an Filterzellen mit unterschiedlicher Filterfeinheit ihre jeweilige Filtrationsaufgabe wahrnehmen. Die jeweilige Filterzelle kann zu beiden Seiten hin eine Drainageschicht begrenzen, so dass über diese Drainageschicht zugeführtes Unfiltrat nach beiden Seiten hin durch das Filtermedium filtrierbar ist, was die Filtrierleistung verdoppelt gegenüber Lösungen mit nur einem, sich an einer Drainageschicht abstützenden Filtermedium. Des weiteren können als Filtermedium mehrere Schichten an Filterlagen, beispielsweise in Form von Tiefenfilterschichten, eingesetzt werden, was in hohem Maße eine Selektivität für die jeweils anstehende Filtrationsaufgabe erlaubt.

Weitere vorteilhafte Ausführungsformen der erfindungsgemäßen Filtervorrichtung sind Gegenstand der sonstigen Unteransprüche.

Im folgenden wird die erfindungsgemäße Filtervorrichtung nebst Filterzelle anhand eines Ausführungsbeispiels nach der Zeichnung näher erläutert. Dabei zeigen in prinzipieller und nicht maßstäblicher Darstellung die
- Fig. 1: eine stirnseitige Außenansicht auf eine geschlossene Filterzelle;
- Fig. 2: eine Draufsicht auf die wesentlichen Komponenten der erfindungsgemäßen Filtervorrichtung im Montagezustand;
- Fig. 3: eine der Fig.2 entsprechende Darstellung der Filtervorrichtung im Betriebszustand;
- Fig. 4: einen Schnitt durch eine Filterzelle längs der Linie A - A in Fig. 1;
- Fig. 5 und 6: in vergrößerter Darstellung Ausschnitte X bzw. Y der Filterzellendarstellung nach der Fig.4.

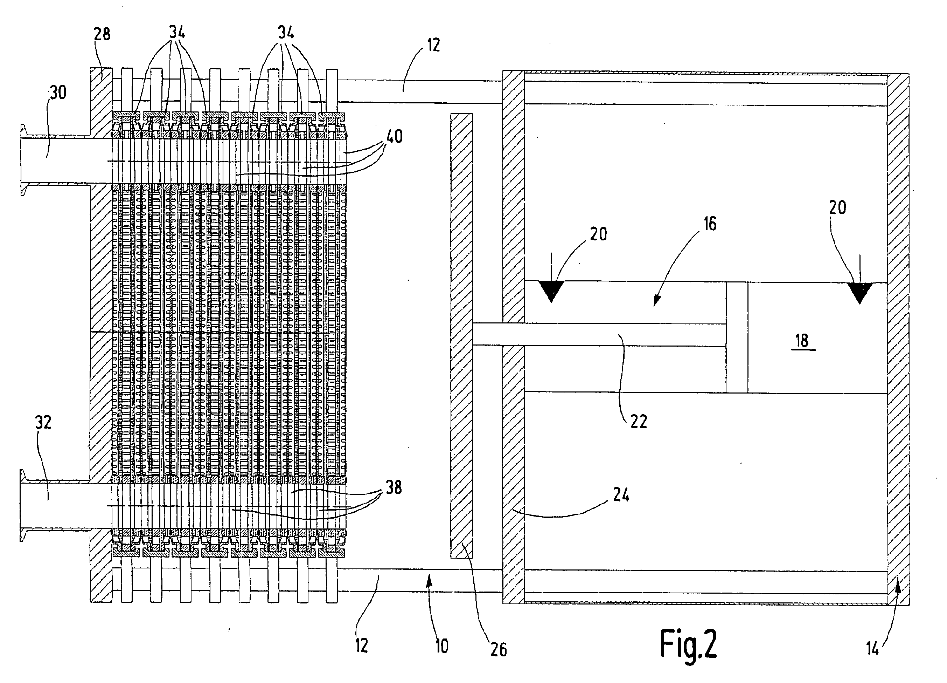

Die in der Fig.2 im Montagezustand gezeigte Filtervorrichtung, die man fachsprachlich auch mit Filterpresse bezeichnet, weist eine als Ganzes mit 10 bezeichnete Halteeinrichtung auf, die im wesentlichen aus zwei Längsstäben 12 besteht, die sich in Längsrichtung der Vorrichtung erstrecken und endseitig in einem als Ganzes mit 14 bezeichneten Maschinengestell fest gelagert sind. Das Maschinengestell 14 kann auf Rollen gelagert sein zum Verfahren der Filtervorrichtung an ihren jeweiligen Einsatzort. Der dahingehende Aufbau einer Filtervorrichtung ist üblich, so dass an dieser Stelle hierauf nicht mehr näher eingegangen wird.

Des weiteren weist die Filtervorrichtung eine als Ganzes mit 16 bezeichnete Presseinrichtung auf, die über einen Arbeitszylinder oder Aktuator 18 verfügt. Der dahingehende Aktuator 18 kann hydraulisch oder pneumatisch angesteuert sein, wobei die kolbenseitigen und stangenseitigen Anschlußstellen 20 der einfacheren Darstellung wegen symbolisiert wiedergegeben sind. Der Aktuator 18 durchgreift mit seiner Betätigungsstange 22 eine Trennwand 24 des Maschinengestells 14 und ist an seinem freien Ende mit einer Endplatte 26 verbunden, die sich zwischen den beiden Längsstäben 12 erstreckt und im Montagezustand gemäß der Darstellung nach der Fig.2 eine zurückgefahrene Position einnimmt, bei der die Endplatte 26 benachbart gegenüberliegend zur Trennwand 24 dort zur Ruhe kommt. Nach außen hin ist das Maschinengestell 14 von einer weiteren Endplatte 28 begrenzt mit einem Unfiltratanschluß 30 und einem Filtratanschluß 32. In Blickrichtung auf die Fig.2 gesehen, also in Draufsicht, kann unter dem jeweiligen Anschluß 30,32 ein weiterer, vorzugsweise gleichgearteter Anschluß (nicht dargestellt) liegen und die weitere Endplatte 28 gleichfalls, wie dargestellt, durchgreifen. Die genannten Anschlüsse 30,32 dienen dazu, die Filtervorrichtung an ein fluidführendes Gesamtsystem anzuschließen, um das dahingehend in Umlauf befindliche Fluid zu filtrieren und mithin abzureinigen oder um eine Stoffgewinnung an Fluidbestandteilen zu erreichen.

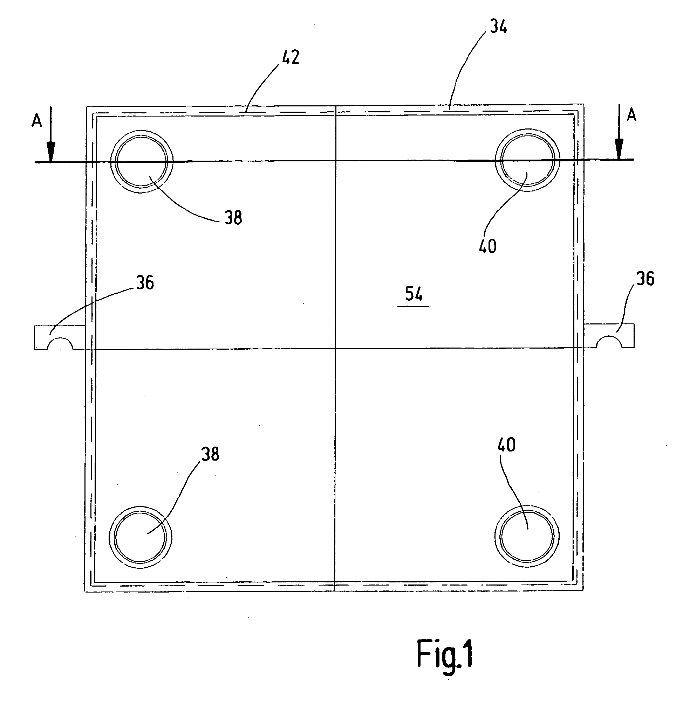

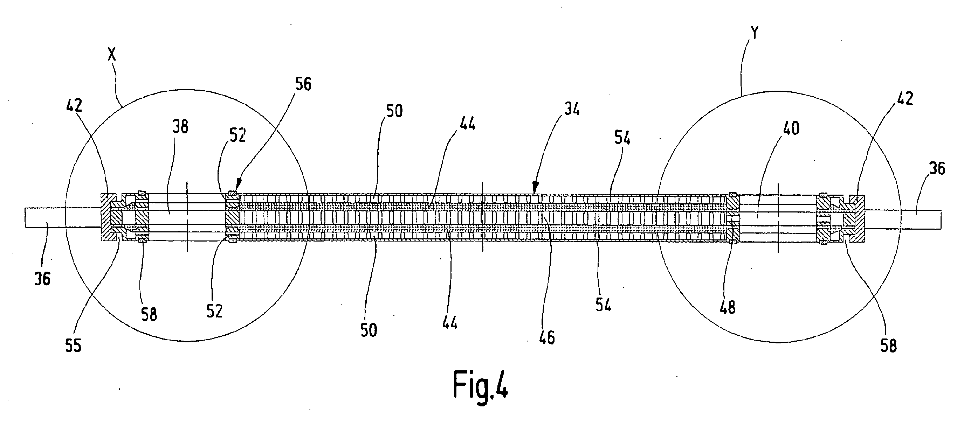

Zwischen den beiden Endplatten 26,28 erstrecken sich die einzelnen Filterzellen 34, wobei eine Filterzelle 34 mit ihrer stirnseitigen Ansicht in der Fig.1 wiedergegeben ist. Die jeweilige Filterzelle 34 ist also bei dem vorliegenden Ausführungsbeispiel aus einer Art Filterplatte mit flächiger, quadratischer Ausdehnung gebildet, wobei die jeweilige Filterzelle 34 entlang ihren beiden gegenüberliegenden vertikalen Längsrändern gemäß der Darstellung nach der Fig.1 mit randseitig vorspringenden Haltestegen 36 versehen ist, die mit ihrer konkaven Ausnehmung auf die zylindrischen Längsstäbe 12 gleicher Höhe in der Filtervorrichtung einsetzbar sind. Ferner weist jede Filterzelle 34 in den Ecken ihrer plattenförmigen Ausgestaltung in jeweils gleichen Höhen einander gegenüberliegend einen Filtratkanal 38 und einen Unfiltratkanal 40 auf. Des weiteren weist die jeweilige Filterzelle 34 randseitig eine klammerartige Zentriereinrichtung 42 auf, die in den Fig.4ff detaillierter wiedergegeben ist.

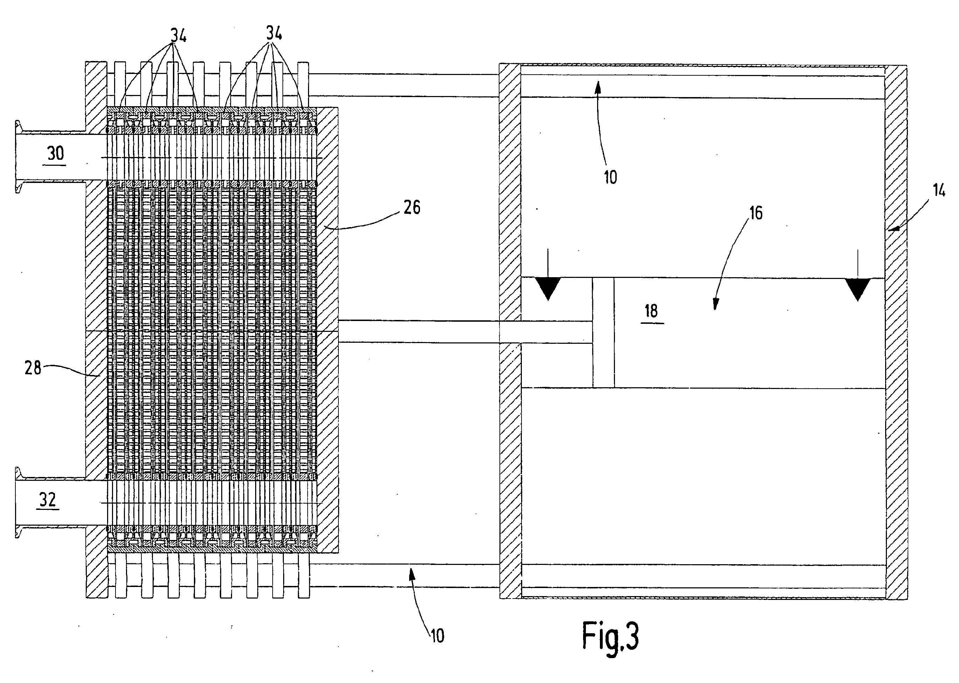

Zur Inbetriebnahme der Filtervorrichtung werden mehrere Filterzellen 34 gemäß der Darstellung nach der Fig.2 in Hintereinanderfolge auf die Halte-einrichtung 10 aufgesetzt und anschließend wird durch Betätigung des Aktuators 18 und über die Endplatte 26 der Stapel an Filterzellen 34 verpreßt gemäß der Darstellung nach der Fig.3. In Blickrichtung auf die Fig.1 gesehen, kann zwischen den beiden unteren Kanälen 38 und 40 eine Ausnehmung (nicht dargestellt) innerhalb der Filterplatte der Filterzelle 34 verlaufen, was zu einer Totraumoptimierung führt, was sich günstig auf die Filtrationsleistungen und die Dichtheit des Systems auswirkt.

Anstelle eines Paketes an Filterzellen 34, wie in den Fig.2 und 3 dargestellt, können auch mehrere Gruppen an Filterzellenanordnungen innerhalb einer Vorrichtung mit ihrem Maschinengestell 14 paketweise aufgenommen sein. Eine mögliche Trennung der einzelnen Gruppen erfolgt dann über nicht näher dargestellte Zwischenplatten. Derart besteht die Möglichkeit, mit unterschiedlichen Filtersystemen und unterschiedlichen Filterfeinheiten eine Fluidbehandlung vor Ort mit der Filtervorrichtung vorzunehmen. Die einzelnen Filterzellen 34 sind als Einwegprodukt ausgebildet, d.h. sie werden im verschmutzten oder verblockten Zustand nach Durchführen einer Filtrationsaufgabe aus der Filtervorrichtung entnommen und sinnfällig entsorgt sowie gegen neue Elemente getauscht. Nach Auswechseln der neuen Filterzellen 34 kann dann erneut der Filtrierbetrieb aufgenommen werden, sobald die Filtervorrichtung, ausgehend von dem Montagezustand nach Fig.2, in den Betriebszustand gemäß der Darstellung nach der Fig. 3 übergeht, bei der die einzelnen Filterzellen 34 über die Presseinrichtung 16 dichtend aneinandergehalten sind.

Damit die Filterzellen 34 für einen dahingehenden Austauschvorgang nicht leckagebehaftet sind, sind diese in der Art eines geschlossenen, gekapselten Systems ausgebildet, das nach außen hin im wesentlichen bis auf die Fluidzu- und -abfuhr als fluiddicht anzusehen ist. Insbesondere ist es mit der erfindungsgemäßen Filtervorrichtung möglich, etwaige Restverschmutzungen sicher zu beherrschen, indem diese über die jeweilige Filterzelle 34 aus dem Gesamt-Filtersystem bei einem Austausch abgeführt werden.

Wie eine einzelne Filterzelle nun aussehen kann, ergibt sich aus den Darstellungen nach den Fig.4ff, wobei die Darstellung nach der Fig.4 einen Schnitt darstellt gemäß der Linie A - A in Fig.1.

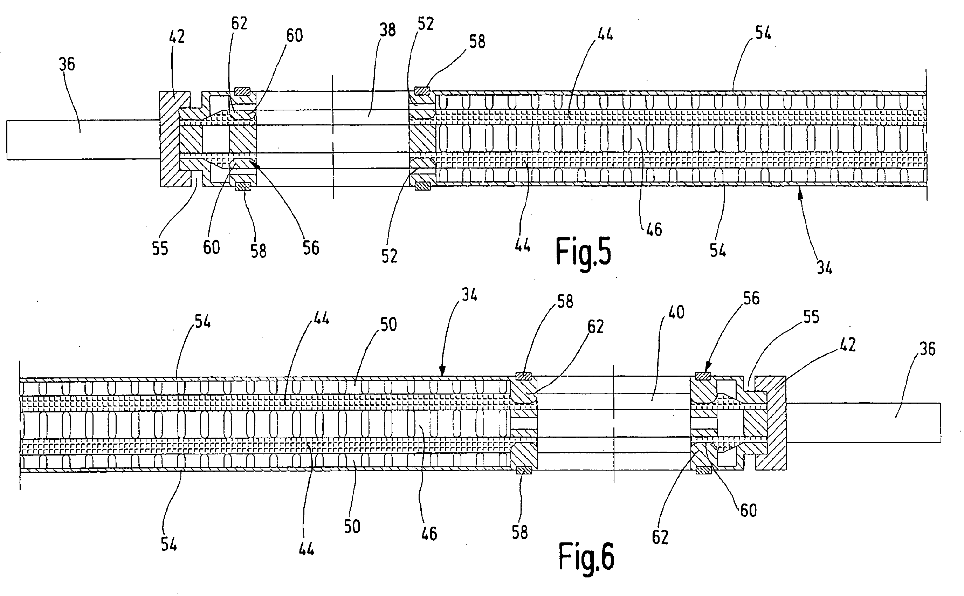

Die in der Fig.4 im Schnitt dargestellte Filterzelle 34 weist zwischen zwei schichtartigen Filtermedien 44 eine sog. Unfiltratdrainageschicht 46 auf, die in Blickrichtung auf die Fig.4 gesehen, rechts über eine Anschlußstelle 48 fluidführend mit dem Unfiltratkanal 40 in Verbindung steht. Die dahingehend im Kreis mit Y bezeichneten Verhältnisse sind in der Fig.6 vergrößert wiedergegeben. Nach außen hin schließt sich an die beiden Filtermedien 44 je eine gleich aufgebaute Filtratdrainageschicht 50 an, die in Blickrichtung auf die Fig. 4 gesehen links über weitere Anschlußstellen 52 jeweils in den gemeinsamen Filtratkanal 38 münden. Die dahingehenden Verhältnisse sind wiederum in vergrößerter Darstellung in Fig.5 wiedergegeben, die den in Fig.4 mit Y umrandeten Zeichnungskreisausschnitt betrifft. Zu dieser linken Seite hin ist die mittlere Unfiltratdrainageschicht 46 gegenüber dem Filtratkanal 38 durch randseitige Plattenteile der Filterzelle 34 abgeschlossen. Nach außen hin, also in Richtung der stirnseitigen Endbereiche, ist dann die jeweilige Filterzelle 34 mit einer an sich geschlossenen Kapselhülle versehen, die aus zwei plattenartigen, dünnwandigen Randschichten 54 gebildet ist.

Anstelle der gezeigten Anordnung könnte eine Filterzelle 34 aber auch nur aus zwei Drainageschichten 46,50 bestehen sowie einem dazwischenliegenden Filtermedium 44. Das Filtermedium könnte aber auch mehrschichtig so aufgebaut sein, dass es von seinen Außenschichten her Drainagefunktionen wahrnehmen kann zwecks Zu- und Abfuhr des Unfiltrats bzw. Filtrats. Bei der vorliegenden bevorzugten Lösung wird hingegen über den Unfiltratkanal 40 und die Anschlußstelle 48 das Unfiltrat der Unfiltratdrainageschicht 46 zugeführt und von dort aus beidseitig nach Durchqueren des angrenzenden Filtermediums 44 das Filtrat über die Filtratdrainageschichten 50 und die weiteren Anschlußstellen 52 an den Filtratkanal 38 weitergeleitet. Dergestalt verdoppelt sich die Filtrationsleistung einer Filterzelle 34 gegenüber einer Lösung mit nur einem Filtermedium 44. Die in Reihe hintereinander angeordneten Filtratkanäle 38 und Unfiltratkanäle 40 sind dann bei in der Filtervorrichtung eingesetzten Filterzellen 34 (vgl. Darstellung nach der Fig.2) voneinander getrennt und mit dem jeweils vorgesehenen Unfiltratanschluß 30 bzw. Filtratanschluß 32 fluidführend verbindbar.

Damit eine sinnfällige Abdichtung zwischen den einzelnen Filterzellen 34 erfolgen kann, ist eine als Ganzes mit 56 bezeichnete Dichteinrichtung vorgesehen, die mit ringförmigen Dichtmitteln 58, die die Kanäle 38,40 umgeben, zunächst diese gegenüber der Umgebung abdichten und dergestalt eine fluiddichte Verbindung herstellen zu den Anschlüssen 30,32 der Filtervorrichtung. Die dahingehenden Dichtmittel 58 stehen zumindest im Vormontagezustand (vgl. Fig. 2) in Längsrichtung über die eigentliche randseitige Begrenzung der jeweiligen Filterzelle 34 vor und im verpreßten Betriebszustand gemäß der Darstellung nach der Fig.3 sind die einzelnen, einander angrenzenden Dichtmittel 58 benachbarter Filterzellen 34 gegeneinander verpreßt.

Neben den genannten Dichtmitteln 58 weist die Dichteinrichtung 56 weitere Dichtmittel 60 auf, die zum einen aus dem randseitigen Bereich eines jeden Filtemediums 44 bestehen und zum anderen aus vorspringenden Dichtnasen 62, gebildet aus Rahmenteilen der Filterzelle 34, die in das jeweilige Filtermedium 44 pressend eingreifen. Die dahingehende Pressvorspannung wird noch erhöht, wenn die Filtervorrichtung von ihrem Montagezustand nach der Fig.2 in den Betriebs- oder Filtrierbetrieb nach der Fig.3 übergeht, bei der mittels der Presseinrichtung 16 die einzelnen Filterzellen 34 gegeneinander verpreßt sind, wobei der dahingehende Dichtspalt dann noch verringert wird, indem das Paket von Filtermedien 44, Randschichten 54 sowie Drainageschichten 46,50 gegeneinander sich verdichtend verpreßt wird.

In umgekehrter Reihenfolge, also beim Zurückfahren des Stempels mit Endplatte 26, wird die dahingehende Dichtkraft wieder gelockert und in axialer Längsrichtung gesehen, federn die vorher zusammengepreßten Schichten wieder zurück in ihre Ausgangslage. Um ein Auseinanderfallen der Schichten einer Filterzelle 34 zu vermeiden, dient, wie bereits erwähnt, die Zentriereinrichtung 42 dergestalt, dass sie die Randschichten 54 umfaßt, die zu diesem Zweck (vgl. Darstellung Fig.4ff) aufeinander zu zurückversetzt sind, und zwar um eine Stufe 55, wobei die dahingehend abgesetzten Randschichten 54 zwischen sich und einem Rahmenteil der Filterzelle 34 wiederum die randseitigen Enden des jeweiligen Filtermediums 44 gegeneinander dichtend verpressen. Die Zentriereinrichtung 42 kann auch aus einem umspritzten Kunststoffrand bestehen.

Somit ist für die einzelnen Fluidkanäle 38,40 einer jeden Filterzelle 34 der Filtrat- vom Unfiltratraum dichtend getrennt. Die Abdichtung erfolgt im Bereich der Fluidkanäle 38,40 über die Verpressung des jeweiligen Filtermittels in Form der Filtermedien 44. Dafür ist die eigentliche Filtratdrainage mit Dichtkanten in Form der Dichtmittel 60 nebst Dichtnasen 62 versehen. Im Montagezustand der einzelnen Filterzellen 34 (vgl. Fig.3) wird das jeweilige Filtermedium 44 unter der derart gebildeten Dichtkante leicht verpreßt, wobei beim Zusammenfahren der Filterpresse die dahingehend gebildeten Dichtkanten tiefer in das Filtermedium 44 gedrückt werden, so dass dergestalt das Filtermedium 44 stark komprimiert unter der Dichtkante, gebildet durch die Rahmenteile, zu liegen kommt. Die dafür nötige hohe Kraft wird von dem Aktuator 18 bereitgestellt, der auch in Mehrfachanordnung (nicht dargestellt) vorhanden sein kann. Die jeweiligen Dichtmittel 58,60 können aus gleichen oder verschiedenen Dichtmaterialien gebildet sein.

Nach der Filtration werden die verblockten oder verschmutzten Filterzellen 34 über die Filtratkanäle 38 mit Druckluft beaufschlagt. Dadurch werden Unfiltrat und Filtrat weitestgehend aus der jeweiligen Filterzelle 34 herausgedrückt. Danach können die Filterzellen 34 einfach von Hand aus der ausgefahrenen Filterpresse (vgl. Fig.2) entnommen und abschließend entsorgt werden. Durch die fluiddichte Kapselung der jeweiligen Filterzelle 34 verläuft der Ausbau sauber und hygienisch, ohne dass Teile des Filterkuchens oder Fluid verschüttet werden können. Weiterhin entfällt die sonst übliche und aufwändige Reinigung von Mehrweg-Filterplatten. Demgemäß eignet sich das erfindungsgemäße System aufgrund seines hygienischen Handlings besonders zur Filtration bei kritischen Prozess- oder Verfahrensschritten der Pharmazie, Biotechnologie und Chemie.

Die Filtrat- und Unfiltratanschlüsse können, wie dargelegt, unmittelbar an dem Filterpressenrahmen angeordnet sein; es besteht aber auch die Möglichkeit, diese als Teil der jeweils äußersten Filterkassette vorzusehen oder als eigenständiges Einwegbauteil, das zwischen Filterpresse und Filterkassette eingelegt wird und durch jeweils eine Durchführöffnung aus der Filterpresse herausgeführt wird. Ferner können mehrere Filterzellen über Verbindungsmittel modulartig zusammengefaßt und zu vormontierten Filtereinheiten verbunden sein, wobei eine oder mehrere Filtereinheiten in der beschriebenen Form in der Filterpresse eingesetzt werden.

## Patentansprüche

1. Filtervorrichtung, insbesondere Filterpresse, mit mindestens einem Unfiltrat(30)- und einem Filtratanschluß (32) und einer in Längsrichtung sich erstreckenden Halteeinrichtung (10) zur Halterung mindestens einer Filterzelle (34), die mittels einer Presseinrichtung (16) an der Halteeinrichtung (10) festlegbar und mittels einer Dichteinrichtung (56) über Kanäle (38,40) fluidführend mit dem Unfiltrat(30)- und dem Filtratanschluß (32) verbindbar ist, **dadurch gekennzeichnet, dass** die jeweilige Filterzelle (34) im wesentlichen gekapselt und insoweit mit einer geschlossenen Hülle versehen ist, die von der Dichteinrichtung (56) abgedichtet ausschließlich von den Kanälen (38,40) durchbrochen ist.

2. Filtervorrichtung nach Anspruch 1, **dadurch gekennzeichnet, dass** die jeweilige Filterzelle (34) aus einer Filterplatte mit flächiger Ausdehnung gebildet ist.

3. Filtervorrichtung nach Anspruch 1 oder 2, **dadurch gekennzeichnet, dass** die Filterzelle (34) mindestens ein schichtartiges Filtermedium (44) aufweist, das zwischen zwei Drainageschichten (46,50) aufgenommen ist, die nach außen hin zur Bildung der geschlossenen Hülle jeweils eine plattenartige Randschicht (54) aufweisen.

4. Filtervorrichtung nach Anspruch 3, **dadurch gekennzeichnet, dass** die einzelnen Schichten (44,46,50,54) der Filterzelle (34) entlang eines gemeinsamen Außenrandes zumindest teilweise von einer klammerartigen Zentriereinrichtung (42) umfaßt sind.

5. Filtervorrichtung nach einem der Ansprüche 1 bis 4, **dadurch gekennzeichnet, dass** die Dichteinrichtung (56) im Bereich der Kanäle (38,40) Dichtmittel (58) aufweist, die über die geschlossene Hülle in Längsrichtung vorstehen, und weitere Dichtmittel (60) aufweist, die innerhalb der Filterzelle (34) einen Unfiltratbereich von einem Filtratbereich trennen.

6. Filtervorrichtung nach Anspruch 5, **dadurch gekennzeichnet, dass** die weiteren Dichtmittel (60) zumindest teilweise aus Randbereichen des jeweiligen Filtermediums (44) gebildet sind, die zwischen Rahmenteilen der Filterzelle (34) eingespannt sind.

7. Filtervorrichtung nach Anspruch 6, **dadurch gekennzeichnet, dass** unter der Einwirkung der Presseinrichtung (16) die Rahmenteile einer Filterzelle (34) das eingespannte Filtermedium stärker verpressen.

8. Filtervorrichtung nach einem der Ansprüche 1 bis 7, **dadurch gekennzeichnet, dass** die Halteeinrichtung (10) in Längsrichtung mindestens zwei beabstandete Längsstäbe (12) aufweist, auf die in Hintereinanderanordnung die einzelnen Filterzellen (34) mit ihren randseitig vorspringenden Haltestegen (36) aufsetzbar sind.

9. Filtervorrichtung nach einem der Ansprüche 1 bis 8, **dadurch gekennzeichnet, dass** die Presseinrichtung (16) zwei Endplatten (26,28) aufweist, von denen eine den jeweiligen Unfiltrat(30)- und Filtratanschluß (32) aufweist und von denen mindestens eine mittels eines Aktuators (18) auf die andere Endplatte (28) relativ zu und von dieser wieder wegbewegbar ist, und dass zwischen den beiden Endplatten (26,28) die jeweilige Filterzelle (34) - auch gruppenweise zusammengefaßt - von der Halteeinrichtung (10) aufgenommen ist.

10. Filterzelle, bestehend aus mindestens einem schichtartigen Filtermedium (44), das zwischen zwei Drainageschichten (46,50) aufgenommen ist, die nach außen hin zur Bildung einer Filterkapsel eine im wesentlichen geschlossene Hülle aufweisen, die mindestens zwei plattenartige Randschichten (54) als Begrenzung hat.

## Claims

1. Filter device, in particular a filter press, with at least one unfiltrate (30) and one filtrate connection (32) and at least one holding means (10) for holding at least one filter cell (34) extending in a longitudinal direction, the same being affixable to the holding means (10) by means of a compressing means (16) and being connectable with the unfiltrate (30) and the filtrate connection (32) by means of a sealing device (56) via channels (38, 40) in a fluid guiding way, **characterised in that** the relevant filter cell (34) is substantially encapsulated and therefore equipped with an enclosed sleeve sealed by means of the sealing device (56) and penetrated only by the channels (38, 40).

2. Filter device according to Claim 1, **characterised in that** the relevant filter cell (34) consists of a filter plate with a two-dimensional expansion.

3. Filter device according to Claim 1 or 2, **characterised in that** the filter cell (34) comprises at least one layer-like filter medium (44), the same being received between two drainage layers (46, 50) comprising a plate-shaped edge layer (54) each on the outside for forming the enclosed sleeve.

4. Filter device according to Claim 3, **characterised in that** the individual layers (44, 46, 50, 54) of the filter cell (34) are enclosed along a common outer edge at least in part by a clamp-like centering means (42).

5. Filter device according to one of the Claims 1 to 4, **characterised in that** the sealing device (56) comprises sealing means (58) in the area of the channels (38, 40), the same projecting further than the enclosed sleeve in a longitudinal direction, and further sealing means (60) separating an unfiltrate area from a filtrate area within the filter cell (34).

6. Filter device according to Claim 5, **characterised in that** the further sealing means (60) consist at least in part of edge areas of the relevant filter medium (44), compressed between two frame parts of the filter cell (34).

7. Filter device according to Claim 6, **characterised in that** the frame parts of a filter cell (34) compress the enclosed filter medium more firmly under the influence of the compressing means (16).

8. Filter device according to one of the Claims 1 to 7, **characterised in that** the holding means (10) comprises at least two longitudinal rods (12) spaced apart from each other in a longitudinal direction, onto which the individual filter cells (34) can be inserted with their holding bridges (36) projecting at the edges one after the other.

9. Filter device according to one of the Claims 1 to 8, **characterised in that** the compressing means (16) comprises two end plates (26, 28) of which one comprises the relevant unfiltrate (30) and filtrate connections (32), and of which at least one can be moved relative to the other towards or away from the other end plate (28) by means of an actuator (18), and **in that** the relevant filter cell (34) - maybe also combined into groups - is received by the holding means (10) between the two end plates (26, 28).

10. Filter cell consisting of at least one layer-like filter medium (44) received between two drainage layers (46, 50) comprising a substantially enclosed sleeve on the outside for forming a filter capsule, the same comprising at least two plate-like delimiting edge layers (54).

## Revendications

1. Dispositif de filtration, en particulier filtre-presse, comportant au moins un raccord de non-filtrat (30) et un raccord de filtrat (32) et un dispositif de maintien (10) qui s'étend en direction longitudinale et sert à maintenir au moins une cellule filtrante (34) susceptible d'être appliquée au dispositif de maintien (10) à l'aide d'un dispositif de pressage (16) et d'avoir une liaison conductrice de fluide avec le raccord de non-filtrat (30) et avec le raccord de filtrat (32) à l'aide d'un dispositif d'étanchéité (56) par l'intermédiaire de canaux (38, 40),
**caractérisé en ce que** chaque cellule filtrante (34) est pratiquement encapsulée et dans cette mesure est munie d'une enveloppe fermée qui est rendue étanche par le dispositif d'étanchéité (56) et est interrompue seulement par les canaux (38, 40).

2. Dispositif de filtration selon la revendication 1, **caractérisé en ce que** chaque cellule filtrante (34) est formée d'une plaque filtrante s'étendant à plat.

3. Dispositif de filtration selon la revendication 1 ou 2, **caractérisé en ce que** la cellule filtrante (34) comporte au moins un milieu filtrant (44) en couches reçu entre deux couches de drainage (46, 50) qui comportent chacune vers l'extérieur une couche de bord (54) en plaque pour former l'enveloppe fermée.

4. Dispositif de filtration selon la revendication 3, **caractérisé en ce que** le long d'un bord extérieur commun les différentes couches (44, 46, 50, 54) de la cellule filtrante (34) sont au moins en partie entourées par un dispositif de centrage (42) sous forme de pince.

5. Dispositif de filtration selon l'une des revendications 1 à 4, **caractérisé en ce que** dans la zone des canaux (38, 40) le dispositif d'étanchéité (56) comporte des moyens d'étanchéité (58) qui dépassent de l'enveloppe fermée en direction longitudinale et d'autres moyens d'étanchéité (60) qui à l'intérieur de la cellule filtrante (34) séparent une zone de non-filtrat d'une zone de filtrat.

6. Dispositif de filtration selon la revendication 5, **caractérisé en ce que** les autres moyens d'étanchéité (60) sont au moins en partie formés par des zones de bord du milieu filtrant (44) correspondant, lesquelles sont encastrées entre des parties de cadre de la cellule filtrante (34).

7. Dispositif de filtration selon la revendication 6, **caractérisé en ce que**, sous l'effet du dispositif de pressage (16), les parties de cadre d'une cellule filtrante (34) compriment plus fortement le milieu filtrant encastré.

8. Dispositif de filtration selon l'une des revendications 1 à 7, **caractérisé en ce que**, en direction longitudinale, le dispositif de maintien (10) comporte au moins deux tiges longitudinales (12) à distance l'une de l'autre sur lesquelles les différentes cellules filtrantes (34), disposées les unes derrière les autres, peuvent être posées à l'aide de leurs barrettes de maintien (36) proéminentes sur le côté.

9. Dispositif de filtration selon l'une des revendications 1 à 8, **caractérisé en ce que** le dispositif de pressage (16) comporte deux plaques terminales (26, 28) dont une comporte le raccord de non-filtrat (30) et le raccord de filtrat (32) correspondants et dont au moins une peut exécuter un mouvement de va-et-vient par rapport à l'autre plaque terminale (28) à l'aide d'un actionneur (18) et qu'entre les deux plaques terminales (26, 28) la cellule filtrante (34) correspondante - même rassemblée en groupes - est reçue par le dispositif de maintien (10).

10. Cellule filtrante formée d'au moins un milieu filtrant (44) en couche reçu entre deux couches de drainage (46, 50) qui, pour former une capsule filtrante, comportent vers l'extérieur une enveloppe pratiquement fermée munie d'au moins deux couches de bord (54) en plaque pour servir de délimitation.
